# EUROPEAN PATENT APPLICATION

(11) **EP 4 800 889 A1**
(43) Date of publication of application: **02.09.2026**
(21) Application number: 25160678.6
(22) Date of filing: 27.02.2025
(51) Int. Cl.: H02K 1/20, H02K 1/32

(54) **RADIAL VENT PLATE AND ROTATING ELECTRIC MACHINE INCORPORATING THE SAME**

(71) Applicant: Innomotics GmbH, 90441 Nürnberg (DE)
(72) Inventor: The designation of the inventor has not yet been filed
(74) Representative: Michalski Hüttermann & Partner mbB

(57) **Abstract**

The invention relates to a radial vent plate (1) for a rotating electric machine. The radial vent plate (1) comprises a single-piece body cut or formed from a sheet material, wherein the single-piece body is configured to axially overlap with core plates (3) of the rotating electric machine to form cooling channels therebetween. The invention further relates to a rotating electric machine comprising a plurality of such radial vent plates (1) arranged to axially overlap with core plates (3) of at least one of a stator or a rotor (120), forming cooling channels within the rotating electric machine.

## Description

The present invention relates to a radial vent plate for a rotating electric machine and a rotating electric machine incorporating the radial vent plate.

Rotating electric machines are used in various industrial applications for converting electrical energy into mechanical energy or vice versa. These machines typically consist of a stationary component (stator) and a rotating component (rotor) separated by an air gap. Efficient cooling of rotating electric machines can help maintain their performance and longevity.

One method for cooling rotating electric machines involves the use of radial ventilation systems. These systems incorporate cooling channels within the machine's core structure to facilitate air flow and heat dissipation. The core structure of rotating electric machines often comprises stacked laminations or plates made of magnetic materials.

Conventional cooling designs for rotating electric machines face several challenges. One issue is the complexity of manufacturing and assembling intricate cooling channel structures within the machine's core. Another problem is achieving uniform cooling distribution throughout the machine, particularly in larger machines with higher power ratings.

Additionally, existing cooling solutions may add weight to the machine, potentially impacting its overall efficiency and performance. There is also a desire for cooling designs that can be adapted to different machine sizes and configurations without requiring extensive redesign or tooling changes.

Furthermore, there may be a need for improved stator and rotor core stability and stiffness, which can be influenced by the design of cooling structures integrated within the machine.

It has been appreciated that a cooling system that addresses one or more of these problems could be beneficial.

Based on the known radial vent plate designs for rotating electric machines, the present invention addresses the challenge of providing a radial vent plate that improves the internal cooling circuit and enhances stator/rotor core stability and stiffness while simplifying manufacturing and assembly.

The invention solves this problem through a radial vent plate according to claim 1.

The following paragraphs elaborate on definitions for the technical terms used in the claim set. The definitions should not be understood and limiting to the disclosure, but rather as hinting on some ways of understanding implementations of the invention while not excluding interpretations not mentioned in the definitions. Accordingly, other implementations are within the scope of the following paragraphs.

The invention relates to a radial vent plate for a rotating electric machine. The radial vent plate comprises a single-piece body cut or formed from a sheet material, wherein the single-piece body is configured to axially overlap with core plates of the rotating electric machine to form cooling channels therebetween. This design simplifies manufacturing and assembly by eliminating the need for welding or other joining techniques. The single-piece construction enhances structural integrity while allowing for complex cooling channel geometries. The axial overlapping configuration enables efficient heat transfer from the core plates to the cooling channels. Alternative implementations could explore different sheet materials with varying thermal and mechanical properties to optimize performance for specific applications. A plurality of vent plates can be arranged along a circular path to form a round or cylindric cooling unit, especially with a large diameter of several meters, e.g. 14m. The vent plate can be designed to be used within a rotor or a stator.

According to an aspect of the radial vent plate, the single-piece body comprises a plurality of protrusions extending from a surface of the single-piece body. The radial vent plate comprising the protrusions ca be formed flat like a sheet with cutouts. These protrusions increase the surface area available for heat transfer, potentially improving cooling efficiency. They can also create turbulence in the airflow, enhancing convective heat transfer. The shape, size, and distribution of these protrusions can be customized to optimize cooling performance for different machine designs. Alternative implementations could incorporate protrusions with varying heights or shapes along the vent plate to address specific cooling needs in different regions of the machine. The shape of the radial vent plate can be described as comb-like wherein the surface can serve as a support structure and the protrusions reminiscent of tines.

According to an aspect of the radial vent plate, the plurality of protrusions is arranged to form curved channels when the radial vent plate is axially overlapped with the core plates. Curved channels can provide more uniform cooling by distributing airflow more evenly across the core plates. They may also reduce air resistance compared to straight channels, potentially improving overall cooling efficiency. The curvature of these channels can be optimized to balance cooling performance with structural considerations. Alternative designs could explore combinations of curved and straight channels within a single vent plate to address varying cooling requirements across different sections of the machine.

According to an aspect of the radial vent plate, the single-piece body comprises at least one milled slot. Milled slots offer precise control over airflow patterns and can be tailored to specific cooling requirements. They can also provide additional structural flexibility, allowing the vent plate to adapt to thermal expansion and contraction during operation. A metal strip can be inserted into the milled slot to stabilize the vent plate. The metal strip can be connected to the vent plate by point weldings. The metal strip can be as thin so that an airflow passage is allowed, if the metal strip intersects a cooling channel. The location, size, and shape of these milled slots can be optimized for different machine designs. A milled slot can be formed, especially, if the thickness of the vent plate is larger than 6mm, preferably 8mm.

According to an aspect of the radial vent plate, the single-piece body is formed from a magnetic or non-magnetic material. This flexibility in material choice allows for optimization of both thermal and electromagnetic properties. Magnetic materials can contribute to the machine's magnetic circuit, potentially improving overall efficiency, while non-magnetic materials may offer better thermal conductivity or corrosion resistance. The choice of material can be tailored to specific application requirements. Alternative designs could explore the use of composite materials or layered structures combining magnetic and non-magnetic materials to achieve optimal performance characteristics.

According to an aspect of the radial vent plate, the single-piece body has a thickness ranging from 1 mm to 15 mm. Preferably, the thickness of the radial vent plate can range from 5mm to 10mm. Preferably, the radial vent plate has a uniform thickness. This range of thicknesses provides flexibility in balancing structural integrity with cooling performance. Thicker plates may offer greater stiffness and allow for more complex cooling channel designs, while thinner plates can reduce overall machine weight and material costs. The optimal thickness can be selected based on specific machine requirements and operating conditions. Alternative implementations could incorporate variable thickness within a single vent plate to provide targeted structural support or enhanced cooling in critical areas. Preferably, the single-piece body can be cut by a laser technique.

According to an aspect of the radial vent plate, the single-piece body comprises at least one surface structure. Surface structures can enhance heat transfer by increasing turbulence in the airflow and expanding the effective surface area for cooling. These structures can be designed in various shapes and patterns to optimize cooling performance for specific machine designs. They may also contribute to the structural rigidity of the vent plate. Alternative implementations could explore dynamic or adaptive surface structures that change shape or orientation based on operating conditions to provide optimal cooling across different machine states.

According to an aspect of the radial vent plate, the single-piece body comprises a split line dividing the single-piece body into an upper section and a lower section. This split line design allows for differential treatment or shaping of the upper and lower sections, potentially optimizing both cooling performance and structural support. It may also facilitate easier assembly or maintenance of the machine. The location and nature of the split line can be customized based on specific machine requirements. Alternative designs could incorporate multiple split lines or non-linear split patterns to address complex cooling or structural needs in different regions of the machine. The upper section and the lower section can be manufactured separately and connected, e.g. using a formfitting connection, to form the single-piece body. Different materials can be used for the upper section and the lower section. Material can be saved.

According to an aspect of the radial vent plate, the radial vent plate comprises a plurality of interconnected single-piece bodies. The plurality of single-piece bodies can form a radial vent plate. The plurality of single-piece bodies can comprise different thickness and/or shape. The plurality of single-piece bodies can be interconnected by e.g. baking varnish or other joining techniques.

A radial vent plate refers to a component used in rotating electric machines to facilitate cooling and ventilation. It is typically a flat or shaped piece of material with openings or channels that allow for the passage of air or coolant. In the context of this invention, the radial vent plate is designed as a single-piece body cut or formed from sheet material, which can be integrated into the core structure of the machine to create cooling channels.

A rotating electric machine is a device that converts electrical energy into mechanical energy (motor) or vice versa (generator). It typically consists of a stationary component (stator) and a rotating component (rotor). In this invention, the rotating electric machine incorporates radial vent plates to enhance its cooling system and structural integrity.

Core plates refer to the thin sheets of magnetic material, typically electrical steel, that are stacked together to form the core of the stator or rotor in a rotating electric machine. These plates are designed to minimize eddy current losses and provide the necessary magnetic properties for the machine's operation. The core plate can have a thickness ranging from 0.5 to 1mm.

Cooling channels are passages or spaces within the structure of a rotating electric machine that allow for the circulation of air or coolant. In this invention, these channels are formed by the axial overlapping of radial vent plates with core plates, creating pathways for heat dissipation. Protrusions, in the context of this invention, refer to raised features extending from the surface of the radial vent plate. These protrusions can be designed to enhance heat transfer, create specific airflow patterns, or provide structural support.

Milled slots are precision-cut openings or channels in the radial vent plate. These slots can be created using a milling process and are designed to provide additional pathways for air circulation or to accommodate other components a metal strip in order to stabilize the vent plate.

A magnetic material is a substance that can be magnetized or attracted by a magnetic field. In the context of rotating electric machines, magnetic materials are typically used in the core structure to conduct and shape magnetic flux. Common examples include electrical steel and soft magnetic composites.

A non-magnetic material is a substance that is not significantly affected by magnetic fields. In rotating electric machines, non-magnetic materials may be used for insulation, structural support, or in areas where magnetic properties are not desired. Examples include aluminum, stainless steel, and various polymers.

Vent plate spacing refers to the distance between adjacent radial vent plates when installed in a rotating electric machine. This spacing is crucial for creating effective cooling zones and balancing thermal performance with structural integrity.

A core package, in the context of this invention, refers to a section of stacked core plates between adjacent radial vent plates. The size and composition of these packages can be optimized to balance electromagnetic performance and cooling efficiency. The core plates can be connected by using baking varnish to form a stable core package.

Total core length describes the overall axial length of the core structure in a rotating electric machine, including both core packages and radial vent plates. This parameter is important for determining the machine's overall size and performance characteristics.

Direct air flow path refers to a cooling channel configuration that allows air to move in a relatively straight line through the machine, typically from one end to the other. This design can provide efficient cooling for high-heat areas.

Indirect air flow path describes a cooling channel arrangement where air follows a more complex route through the machine, potentially circulating around components before exiting. This design may offer more uniform heat distribution throughout the machine.

A split line, as mentioned in the claims, refers to a designed division in the single-piece body of the radial vent plate, separating it into upper and lower sections. This feature can allow for differential treatment or shaping of different parts of the vent plate to optimize cooling performance or facilitate assembly.

The radial vent plate design according to the invention offers several significant advantages over previous cooling solutions for rotating electric machines. By utilizing a single-piece body cut or formed from sheet material, this invention simplifies the manufacturing process and reduces assembly complexity compared to conventional designs that often require welding or joining of multiple components. This streamlined approach not only reduces production costs but also enhances the overall structural integrity of the vent plate.

The configuration allowing axial overlapping with core plates to form cooling channels represents a major improvement in cooling efficiency. This design creates a more integrated cooling system within the machine's core structure, eliminating the need for separate cooling components and potentially reducing the overall size and weight of the machine. The ability to form cooling channels directly between the vent plates and core plates allows for more efficient heat transfer from the core to the cooling air, potentially improving the machine's thermal management capabilities.

The flexibility in material choice, allowing for either magnetic or non-magnetic materials, provides engineers with greater design freedom to optimize both the electromagnetic and thermal properties of the machine. Magnetic materials can contribute to the machine's magnetic circuit, potentially improving overall efficiency, while non-magnetic materials may offer superior thermal conductivity or corrosion resistance for certain applications.

Regarding the radial vent plate, the thickness range of 1 mm to 15 mm offers a balance between structural support and cooling performance. This range allows for customization based on specific machine requirements, with thicker plates providing enhanced stiffness for larger machines and thinner plates reducing weight in applications where minimizing mass is critical.

The incorporation of features such as protrusions, milled slots, and various openings (circular or rectangular) along the upper edge of the vent plate enables fine-tuning of airflow patterns within the machine. These features can be tailored to create optimal cooling channel geometries, potentially improving heat dissipation and reducing hot spots within the machine. The ability to form curved channels through the arrangement of protrusions is particularly advantageous, as it can promote more uniform cooling distribution and potentially reduce air resistance compared to straight channels.

The split line feature, dividing the single-piece body into upper and lower sections, adds another layer of design flexibility. This allows for differential treatment or shaping of different parts of the vent plate, potentially optimizing both cooling performance and structural support within a single component. It may also facilitate easier assembly or maintenance of the machine.

Compared to traditional vent plate designs that often use welded beams or separate components to create cooling channels, this single-piece design offers improved manufacturability and potentially higher reliability due to the reduction in joining points that could be subject to failure under thermal or mechanical stress.

The modular nature of this vent plate design allows for easy scalability and adaptability to different machine sizes and power ratings. By adjusting the number, spacing, and specific features of the vent plates, manufacturers can optimize cooling performance across a wide range of rotating electric machine designs without requiring extensive retooling or redesign. Furthermore, the ability to create both direct and indirect air flow paths through the machine offers enhanced flexibility in cooling system design. This feature allows engineers to tailor the cooling strategy to specific machine configurations and operating conditions, potentially improving overall thermal management and efficiency.

In summary, the radial vent plate design according to the invention represents a significant advancement in cooling technology for rotating electric machines. Its single-piece construction, versatile material options, customizable features, and integrated cooling channel formation offer a combination of manufacturing simplicity, design flexibility, and potential performance improvements that address many of the challenges faced by conventional cooling solutions in this field.

The invention further relates to a rotating electric machine comprising a stator, a rotor, and a plurality of radial vent plates, wherein the plurality of radial vent plates are arranged to axially overlap with core plates of at least one of the stator or the rotor, forming cooling channels within the rotating electric machine. This configuration integrates the radial vent plates directly into the core structure of the machine, creating an efficient cooling system without the need for additional components. The axial overlapping arrangement allows for customizable cooling channel designs that can be tailored to specific machine requirements. Alternative implementations could explore different arrangements of vent plates within the stator and rotor, such as alternating patterns or variable spacing, to optimize cooling performance for different machine sizes and power ratings.

According to an aspect of the rotating electric machine, the plurality of radial vent plates are spaced apart by a vent plate spacing. This spacing allows for the creation of distinct cooling zones within the machine, potentially improving overall heat distribution and dissipation. The vent plate spacing can be adjusted to balance cooling efficiency with structural integrity and manufacturing considerations. Alternative designs could incorporate variable spacing along the length of the machine to address specific cooling needs in different regions, such as areas of higher heat generation.

According to an aspect of the rotating electric machine, a core package is formed between adjacent radial vent plates. This core package arrangement allows for efficient heat transfer from the core material to the cooling channels. The size of the core package can be optimized to balance electromagnetic performance with cooling efficiency. Alternative implementations could explore the use of different core materials or lamination designs within the core packages to further enhance heat dissipation or magnetic properties.

According to an aspect of the rotating electric machine, a rotor or a stator comprises a plurality of core packages and radial vent plates. This modular approach to the core design allows for scalability and adaptability to different machine sizes and power requirements. The ratio of core packages to vent plates can be adjusted to optimize overall machine performance. Alternative designs could incorporate varying core package lengths or vent plate thicknesses along the total core length to address specific cooling or performance needs in different sections of the machine.

According to an aspect of the rotating electric machine, the cooling channels are configured to provide at least one of a direct air flow path or an indirect air flow path through the rotating electric machine. This flexibility in air flow design allows for optimized cooling strategies tailored to specific machine configurations. Direct air flow paths can provide efficient cooling for high-heat areas, while indirect paths may offer more uniform heat distribution. Alternative implementations could combine both direct and indirect paths within a single machine, potentially using active flow control mechanisms to adjust cooling patterns based on operating conditions.

The same arguments and advantages apply to the rotating electric machine as for the radial vent plate. The integration of the novel vent plate design into the rotating electric machine addresses the challenges of improving internal cooling circuits and enhancing stator/rotor core stability and stiffness while simplifying manufacturing and assembly. The modular and customizable nature of the design allows for adaptation to various machine sizes and configurations, potentially improving overall efficiency and performance across a range of applications.

Non-limiting and non-exhaustive examples are described with reference to the following figures.
FIG. 1 shows an exemplary first embodiment of a radial vent plate according to the invention;
FIG. 2 shows an exemplary embodiment of a core plate according to the invention;
FIG. 3 shows an exemplary embodiment of a radial vent plate assembly according to the invention;
FIG. 4 shows a further exemplary embodiment of a radial vent plate assembly according to the invention;
FIG. 5 shows an exemplary embodiment of a radial vent plate with surface structures according to the invention;
FIG. 6 shows an exemplary embodiment of a radial vent plate assembly with milled slots according to the invention;
FIG. 7 shows another exemplary embodiment of a radial vent plate assembly with milled slots according to the invention;
FIG. 8 shows an exemplary embodiment of a radial vent plate assembly illustrating airflow patterns according to the invention;
FIG. 9 shows a further exemplary embodiment of a radial vent plate assembly with a milled slot according to the invention;
FIG. 10 shows another exemplary embodiment of a radial vent plate assembly with a milled slot according to the invention;
FIG. 11 shows an exemplary embodiment of a radial vent plate assembly with a split line according to the invention;
FIG. 12 shows another exemplary embodiment of a radial vent plate assembly with stator core sheets according to the invention;
FIG. 13 shows an exemplary embodiment of a circular radial vent plate on a stator core according to the invention;
FIG. 14 shows another exemplary embodiment of a circular radial vent plate assembly according to the invention;
FIG. 15 shows another exemplary embodiment of a radial vent plate assembly with a milled slot according to the invention;
FIG. 16 shows an exemplary embodiment of a radial vent plate with point weldings and a metal strip in the slot according to the invention;
FIG. 17 shows a further exemplary embodiment of a circular radial vent plate according to the invention; and
FIG. 18 shows another exemplary embodiment of a circular radial vent plate assembly according to the invention.

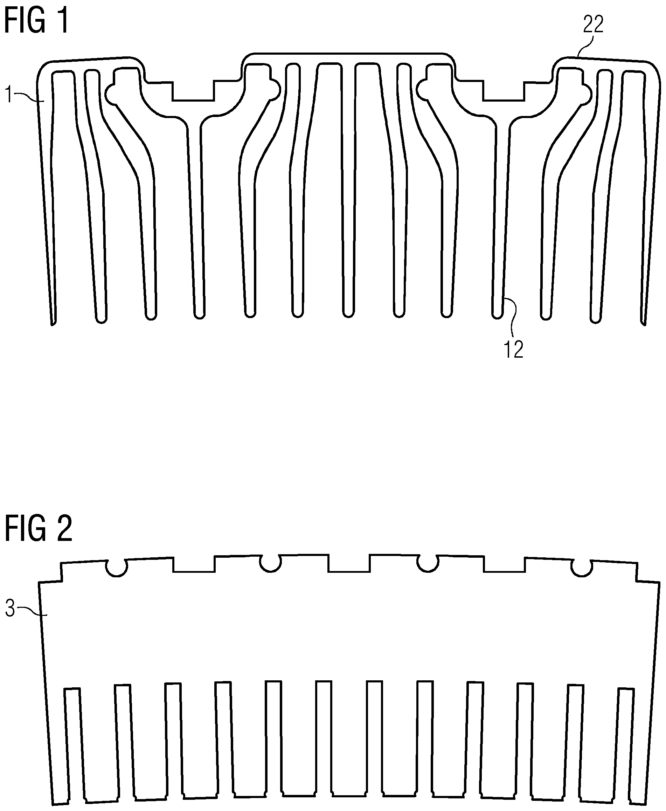

Figure 1 shows a first exemplary embodiment of a radial vent plate 1 for a rotating electric machine. The vent plate 1 is designed to be used within a stator. The vent plate 1 comprises a single-piece body cut or formed from sheet material. The vent plate 1 has a generally rectangular profile with a thickness ranging from 5-10mm. The vent plate 1 features a series of protrusions 12 extending from its surface 22, arranged in a regular pattern along the length of the vent plate 1. The protrusions 12 or the shaped features can be described as finger-like shaped. These protrusions 12 have a curved or wave-like profile, creating alternating raised and lowered sections on the surface 20 of the vent plate 1, especially in connection with the neighbouring core plate(s). This design allows for the formation of cooling channels when axially overlapped with core plates in the rotating electric machine. The curved protrusions 12 are shaped to enhance air flow and heat dissipation within the machine. At the top of the vent plate 1, there is a flat section without protrusions 12, which may serve as a mounting area or provide clearance for other components in the assembled machine, or provide stability for the radial vent plate.

Figure 2 illustrates an orthogonal side view of a core plate for a rotating electric machine. The core plate 3 is shown as a single-piece body cut or formed from sheet material. It features a series of protrusions extending from its surface, arranged in a regular pattern along the length of the core plate. The thickness of the core plate 3 can be 0.65mm.

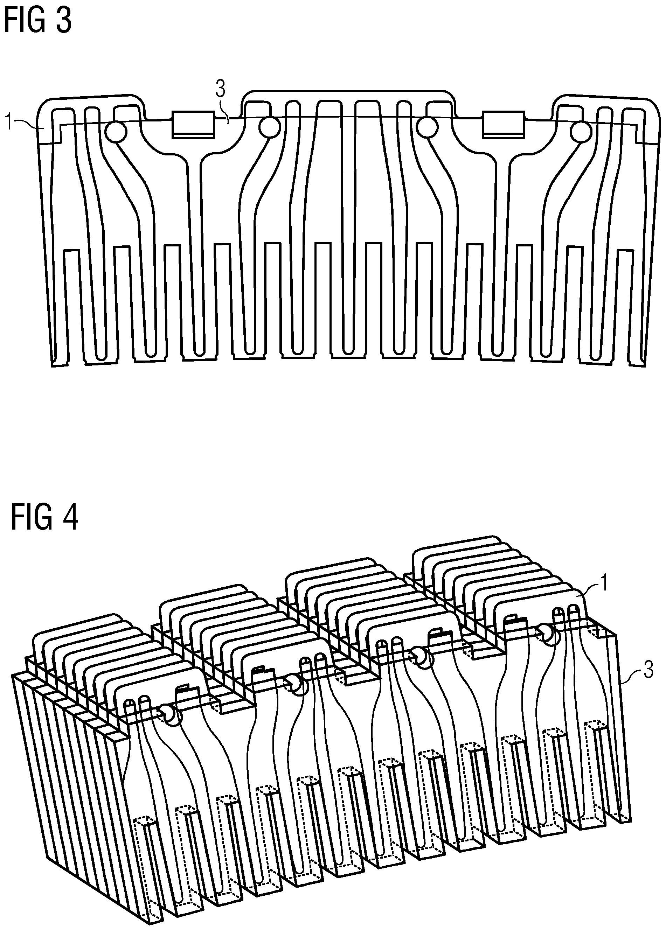

Figure 3 shows another exemplary embodiment of a radial vent plate assembly for a rotating electric machine. The assembly comprises a vent plate 1 positioned adjacent to a core plate 3. The vent plate 1 is shown as a single-piece body cut or formed from sheet material. It features a series of protrusions extending from its surface, arranged in a regular pattern along the length of the vent plate 1. These protrusions create spaces between the vent plate 1 and the adjacent core plate 3 when assembled in the rotating electric machine. The design of the vent plate 1 allows for the formation of cooling channels when axially overlapped with the core plate 3 in the rotating electric machine. When assembled, multiple vent plates 1 and core plates 3 would be stacked alternately, with the protrusions on the vent plates 1 creating a network of cooling channels throughout the machine's structure.

Figure 4 illustrates a further exemplary embodiment of a radial vent plate assembly for a rotating electric machine. Similar to Figure 3, this assembly comprises a vent plate 1 positioned adjacent to a core plate 3. A stack of a plurality of alternating vent plates 1 and core plates 3 is shown. The vent plate 1 is designed to axially overlap with the core plate 3 to form cooling channels within the rotating electric machine. The vent plate 1 features a series of protrusions extending from its surface, arranged in a regular pattern along the length of the vent plate 1. These protrusions create spaces between the vent plate 1 and the adjacent core plate 3 when assembled in the rotating electric machine. The design of the vent plate 1 allows for the formation of cooling channels when axially overlapped with the core plate 3 in the rotating electric machine.

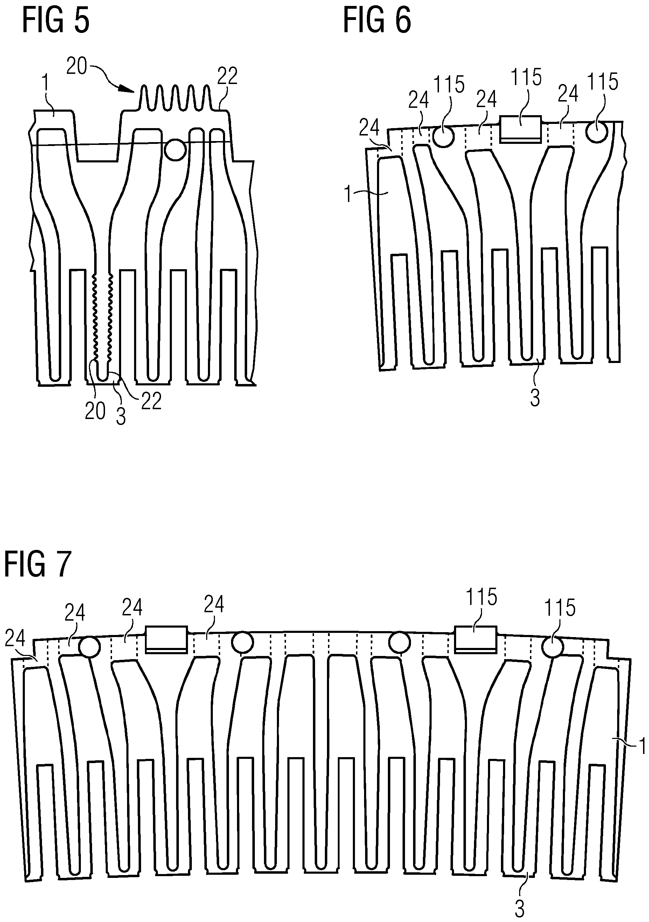

Figure 5 shows an exemplary embodiment of a radial vent plate assembly with surface structures. The assembly comprises a vent plate 1 positioned adjacent to a core plate 3. The vent plate 1 features surface structures 20. The surface structures create a wave-like profile on the surface 22 of the vent plate 1. When assembled in the rotating electric machine, the protrusions on the vent plate 1 create spaces between the vent plate 1 and the adjacent core plate 3. These spaces form cooling channels that allow for air flow and heat dissipation within the machine. The surface structures 20 may further enhance the airflow characteristics by creating additional turbulence or directing the air in specific patterns. The surface structures 20 increase the surface area and have an impact on the air flow behaviour.

Figure 6 illustrates an exemplary embodiment of a radial vent plate with milled slots. The assembly comprises a vent plate 1 positioned adjacent to a core plate 3. The vent plate 1 features a series of milled slots 24 along its upper edge. These milled slots 24 are arranged at regular intervals, creating openings that extend at least partially into the body of the vent plate 1. Along the upper edge or surface of the vent plate, stator or rotor elements 115 are arranged. The stator or rotor elements 115 can be a rod or a bolt, e.g. to stabilize the rotor or stator or the arrangement of core packages and vent plates 1.

Figure 7 shows another exemplary embodiment of a radial vent plate assembly with milled slots. Similar to Figure 6, this assembly comprises a vent plate 1 positioned adjacent to a core plate 3. The vent plate 1 features a series of milled slots 24 along its upper edge. These milled slots 24 are arranged at regular intervals, creating openings that extend at least partially into the body of the vent plate 1.

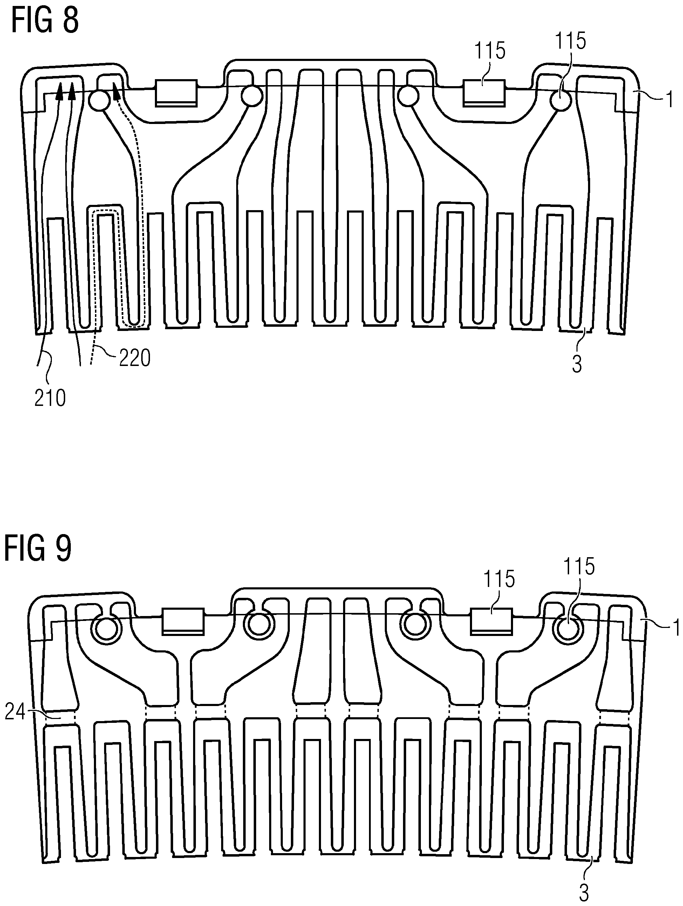

Figure 8 illustrates an exemplary embodiment of a radial vent plate assembly showing airflow patterns. The assembly comprises a vent plate 1 positioned adjacent to a core plate 3. The vent plate 1 features a series of openings or slots along its upper edge. The figure demonstrates two potential airflow patterns: a direct airflow 210 and an indirect airflow 220. The direct airflow 210 is shown passing straight through the openings in the vent plate 1 from the inner diameter to the outer diameter of the assembly. The indirect airflow 220 is depicted as a more circuitous route, initially flowing along the sides of the vent plate 1, then curving around to pass through the openings before exiting towards the outer diameter. This combination of airflow patterns potentially enhances the cooling efficiency of the rotating electric machine. The exemplary embodiment shows a radial vent plate with a combination of direct airflow from the inner diameter to the outer diameter along the stator slot and/or a indirect airflow, where the airflow first passes the right and left side of the stator winding and then is forwarded to the outer diameter.

Figure 9 shows a further exemplary embodiment of a radial vent plate assembly with a milled slot. The assembly comprises a vent plate 1 positioned adjacent to a core plate 3. The vent plate 1 features a series of milled slots 24 along its upper edge. These milled slots 24 are arranged at regular intervals, creating openings that extend at least partially into the body of the vent plate 1. The design of the vent plate 1 allows for the formation of cooling channels when axially overlapped with the core plate 3 in the rotating electric machine. The stator or rotor elements 115 are not located along the outer surface or upper edge of the vent plate 1 (as illustrated in Figure 6). The stator or rotor elements 115 are located along the upper edge of the core plate 3 and at least partially surrounded by the vent plate 1 and / or located in a recess at the upper edge of the vent plate.

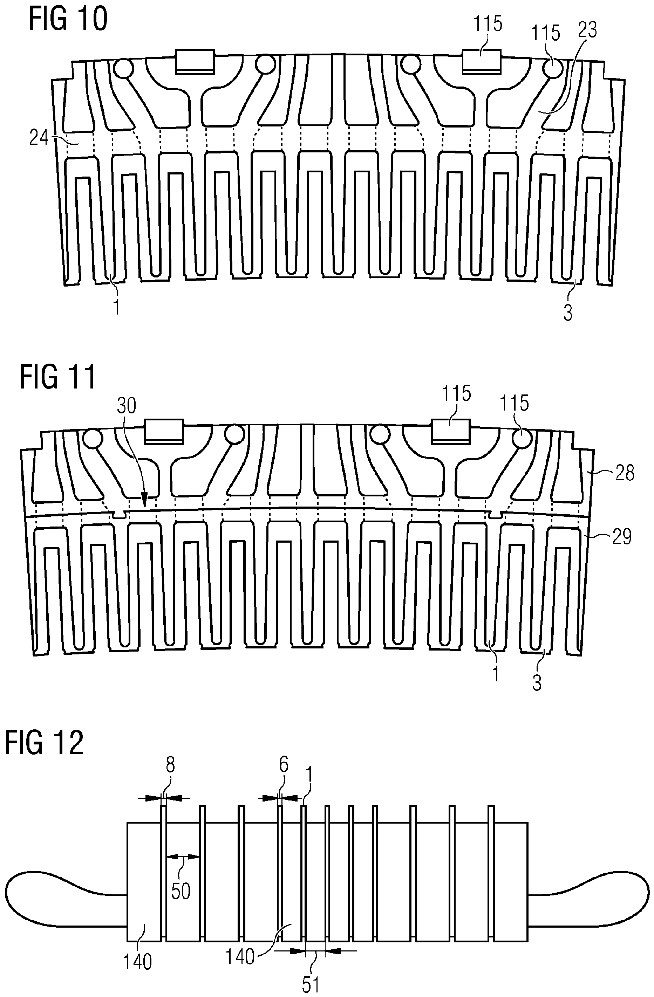

Figure 10 illustrates another exemplary embodiment of a radial vent plate assembly with curved channels. The vent plate 1 is shown as a single-piece body cut or formed from sheet material. The vent plate 1 features a series of curved channels 23 along its surface, creating a wave-like profile. The curved channels 23 are arranged in a regular pattern along the length of the vent plate 1. These channels 23 are designed to enhance air flow and heat dissipation when the vent plate 1 is installed in the rotating electric machine. Along the upper edge of the vent plate 1, a series of milled slots 24 are visible.

Figure 11 shows an exemplary embodiment of a radial vent plate assembly with a split line. The assembly comprises a vent plate 1 positioned adjacent to a core plate 3. The vent plate 1 is shown as a single-piece body cut or formed from sheet material. It features a split line 30 that divides the vent plate 1 into an upper section 28 and a lower section 29. This split line 30 may allow for customization or adjustment of the vent plate design.

Figure 12 illustrates an exemplary combination of different vent plate thickness and core package length along the total core length is shown. The assembly comprises a vent plate 1 positioned adjacent to stator core sheets 140. The stator core sheet 140 can also be desribed as a core plate. The figure indicates different vent plate thickness 6 and 8. Different core package lengths 50, 51 are shown. The total core length is representing the overall axial length of the stator core assembly, including multiple vent plates 1 and stator core sheets 140.

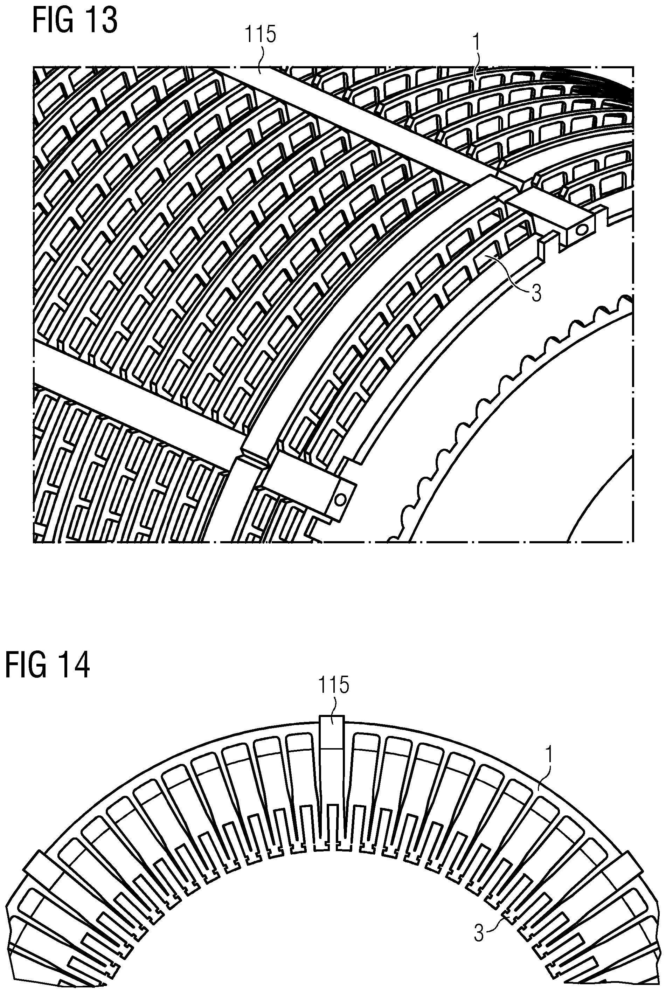

Figure 13 shows an exemplary embodiment of a circular radial vent plate assembly on a stator core for a rotating electric machine. The vent plate 1 is shown as a single-piece body cut or formed from a sheet material, with a circular outer shape designed to fit within the stator or rotor core of an electric machine. The vent plate 1 features a series of protrusions extending from its surface, arranged in a radial pattern. These protrusions are designed to create cooling channels when the vent plate is axially overlapped with core plates 3 of the rotating electric machine. At the outer edge of the vent plate, a series of rectangular cutouts can be observed.

Figure 14 illustrates another exemplary embodiment of a circular radial vent plate assembly for a rotating electric machine. The vent plate 1 is shown as a single-piece body with a circular outer shape and an inner circular opening, creating an annular structure. Along the outer circumference, the vent plate 1 features a series of regularly spaced openings. The inner circumference of the vent plate displays a pattern of alternating wider and narrower sections. Between the outer and inner circumferences, the vent plate body contains multiple rectangular cutouts arranged in a radial pattern, forming spoke-like structures that connect the inner and outer portions of the plate. The vent plate 1 is designed to create cooling channels when the vent plate 1 is axially overlapped with core plates 3 of the rotating electric machine.

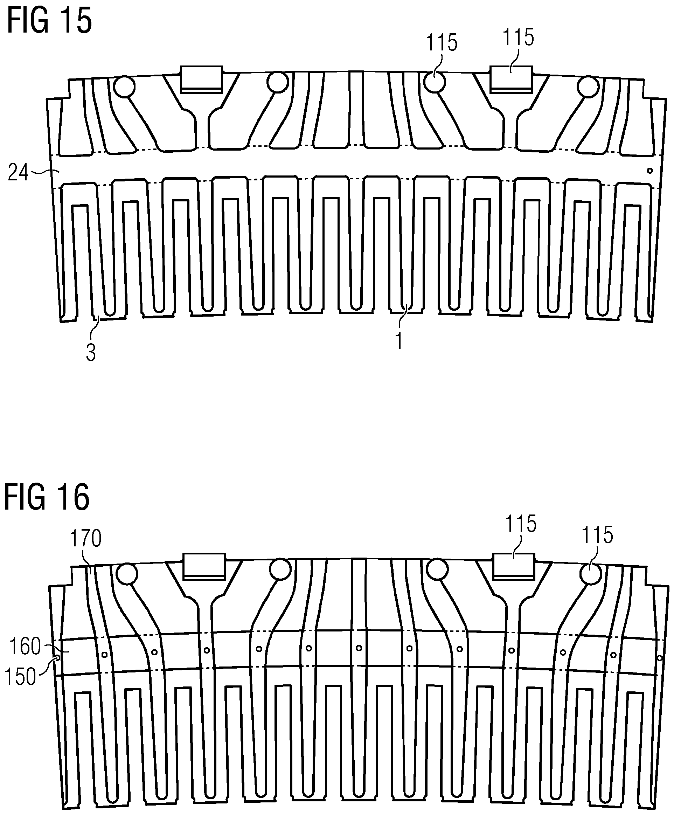

Figure 15 shows another exemplary embodiment of a radial vent plate assembly according to the invention. The vent plate 1 features a horizontal milled slot 24.

Figure 16 illustrates an exemplary embodiment of a radial vent plate with point welding and a metal strip in the slot. The channels are formed like fingers 170. A metal strip 160 is inserted into the slot. Point welding 150 are arranged in a regular pattern across the face of the vent plate, for attaching the metal strip to the vent plate or reinforcing its structure.

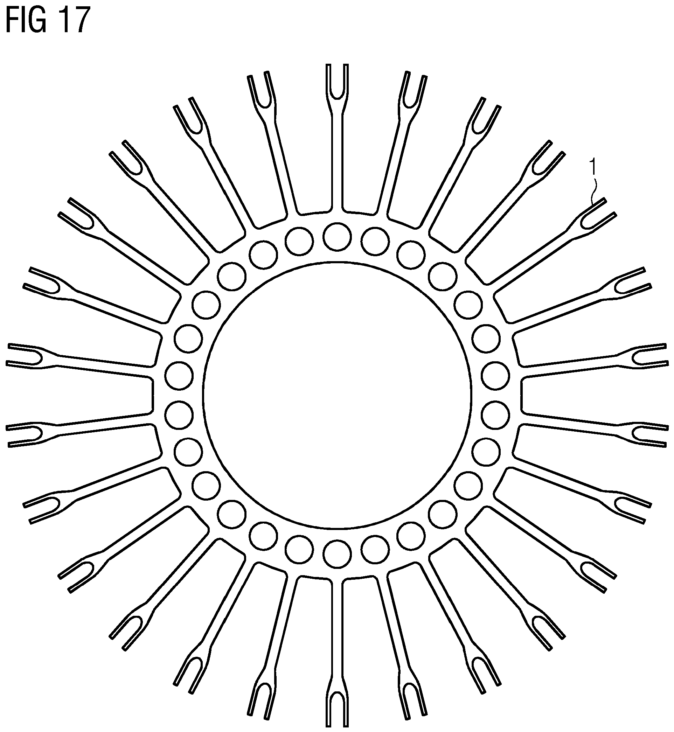

Figure 17 shows a further exemplary embodiment of a circular radial vent plate for a rotating electric machine. The design of the radial vent plate 1 is adapted to the use within a rotor. The vent plate 1 is shown as a single-piece body cut or formed from sheet material, with a circular outer shape and an inner circular opening, creating an annular structure. The outer circumference of the vent plate features a series of regularly spaced rectangular cutouts.

Between the outer and inner circumferences, the vent plate body contains multiple channels arranged in a radial pattern, forming spoke-like structures that connect the inner and outer portions of the plate. Compared to other embodiments, the connecting area of the radial vent plate is provided at an inner radial position.

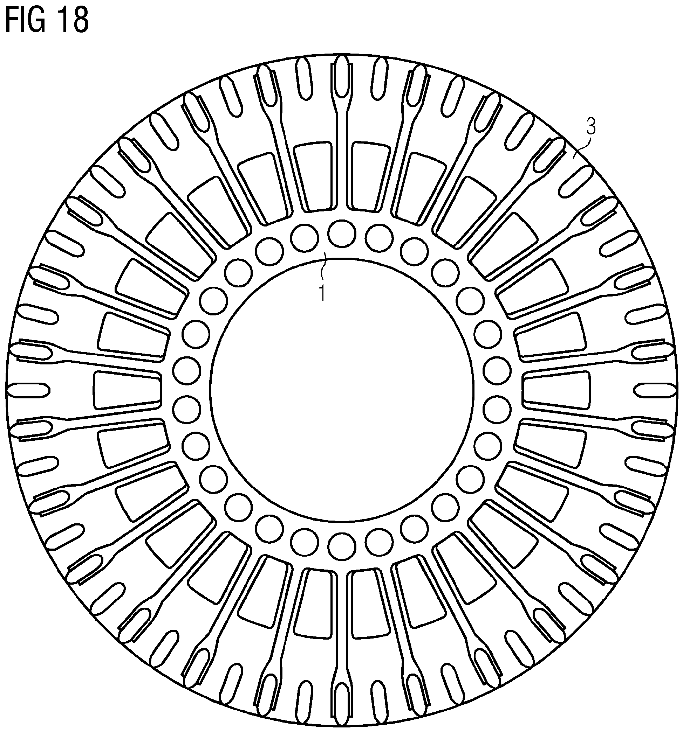

Figure 18 illustrates another exemplary embodiment of a circular radial vent plate assembly for a rotating electric machine. The vent plate 1 of Figure 17 is designed to create cooling channels when the vent plate 1 is axially overlapped with core plates 3 of the rotating electric machine.

*Independent of the grammatical term usage, individuals with male, female or other gender identities are included within the term.*

## Claims

1. A radial vent plate (1) for a rotating electric machine, the radial vent plate (1) comprising:
a single-piece body cut or formed from a sheet material;
wherein the single-piece body is configured to axially overlap with core plates (3) of the rotating electric machine to form cooling channels therebetween.

2. The radial vent plate (1) according to claim 1, wherein the single-piece body comprises a plurality of protrusions (12) extending from a surface (22) of the single-piece body.

3. The radial vent plate (1) according to any one of claims 1 or 2, wherein the plurality of protrusions (12) are arranged to form curved channels (23) when the radial vent plate (1) is axially overlapped with the core plates (3).

4. The radial vent plate (1) according to any one of claims 1 to 3, wherein the single-piece body comprises at least one milled slot (24).

5. The radial vent plate (1) according to any one of claims 1 to 4, wherein the single-piece body is formed from a magnetic or non-magnetic material.

6. The radial vent plate (1) according to any one of claims 1 to 5, wherein the single-piece body has a thickness (6, 8) ranging from 1 mm to 15 mm.

7. The radial vent plate (1) according to any one of claims 1 to 6, wherein the single-piece body comprises at least one surface structure (20).

8. The radial vent plate (1) according to any one of claims 1 to 7, wherein the single-piece body comprises a split line (30) dividing the single-piece body into an upper section (28) and a lower section (29).

9. The radial vent plate (1) according to any one of the claims 1 to 8, wherein the radial vent plate (1) comprises a plurality of interconnected single-piece bodies.

10. A rotating electric machine comprising:
a stator;
a rotor; and
a plurality of radial vent plates (1) according to any one of claims 1 to 9;
wherein the plurality of radial vent plates (1) are arranged to axially overlap with core plates (3) of at least one of the stator or the rotor, forming cooling channels within the rotating electric machine.

11. The rotating electric machine according to claim 10, wherein a core package is formed between adjacent radial vent plates (1).

12. The rotating electric machine according to claim 11, wherein the stator or the rotor comprises a plurality of core packages (130) and radial vent plates (1).

13. The rotating electric machine according to any one of claims 10 to 12, wherein the cooling channels are configured to provide at least one of a direct air flow path (210) or an indirect air flow path (220) through the rotating electric machine.
